# EUROPEAN PATENT SPECIFICATION

(11) **EP 3 715 055 B1**
(45) Date of publication and mention of the grant of the patent: **05.10.2022**
(21) Application number: 20165900.0
(22) Date of filing: 26.03.2020
(51) Int. Cl.: B25F 5/00, H02P 6/30

(54) **ELECTRIC POWER TOOL AND METHOD FOR CONTROLLING THE ELECTRIC POWER TOOL**
ELEKTROWERKZEUG UND VERFAHREN ZUR STEUERUNG DES ELEKTROWERKZEUGS
OUTIL ÉLECTRIQUE ET PROCÉDÉ DE COMMANDE DE L'OUTIL ÉLECTRIQUE

(30) Priority: 29.03.2019 JP 2019068213
(43) Date of publication of application: 30.09.2020
(73) Proprietor: Panasonic Intellectual Property Management Co., Ltd., Osaka-shi, Osaka 540-6207 (JP)
(72) Inventor: SAWANO, Fumiaki, Osaka-shi, Osaka 540-6207 (JP)
(74) Representative: Müller-Boré & Partner Patentanwälte PartG mbB

(56) References cited:
- EP-A1- 3 031 582
- WO-A1-96/41704
- KR-A- 20180 075 769

## Description

### Technical Field

The present disclosure generally relates to an electric power tool and a method for controlling the electric power tool, and more particularly relates to an electric power tool including a motor according to the preamble of claim 1 and a method according to the preamble of claim 9 for controlling an electric power tool.

### Background Art

An electric power tool according to the preamble of claim 1 is known from EP 3 031 582 A1. JP

2016-112633 A discloses an electric power tool. The electric power tool includes: a motor; a driving unit to be driven by the motor; a trigger switch, which may be operated by a user; and a forward/reverse switching unit, which may also be operated by the user to change the direction of rotation of the motor from a forward direction into a reverse direction, or vice versa. The electric power tool further includes a control unit for performing drive control on the motor responsive to the user's operation of the trigger switch. The control unit has a normal mode in which the user is allowed to change the direction of rotation of the motor by operating the forward/reverse switching unit, and a tapping mode in which after the trigger switch has turned from ON to OFF, the direction of rotation of the motor is automatically changed when the trigger switch turns ON next time.

### Summary of Invention

When the electric power tool of JP 2016-112633 A operates in the tapping mode, the direction of rotation of the motor always changes whenever the trigger switch, which has once turned from ON to OFF, turns ON again. In other words, once the trigger switch has turned from ON to OFF, the direction of rotation of the motor will change automatically, regardless of the user's intention, which sometimes makes the electric power tool less handy to use.

It is therefore an object of the present disclosure to provide an electric power tool which is handier to use than known ones and a method for controlling such an electric power tool.

The invention provides an electric power tool according to claim 1. The electric power tool includes: a motor; a driving unit to be driven by the motor; a trigger switch to be operated by a user; a first forward/reverse switching unit; a second forward/reverse switching unit; and a control unit. The first forward/reverse switching unit includes a slide switch operable by the user to change a direction of rotation of the motor from a forward direction to a reverse direction, and vice versa, responsive to the user's operation of the slide switch. The second forward/reverse switching unit is provided separately from the trigger switch and the first forward/reverse switching unit and includes a touch switch operable by the user to change the direction of rotation of the motor from the forward direction to the reverse direction, and vice versa, responsive to the user's operation of the touch switch. The control unit performs drive control on the motor responsive to the user's operation of the trigger switch. The electric power tool has a first mode and a second mode. In the first mode, the control unit performs a type of control of changing the direction of rotation of the motor responsive to the user's operation of the first forward/reverse switching unit. In the second mode, the control unit performs another type of control of changing the
direction of rotation of the motor responsive to the user's operation of the second forward/reverse switching unit.

The invention also provides a method according to claim 9 for controlling an electric power tool. The method is designed to control an electric power tool including a motor and a driving unit to be driven by the motor. The method includes: making the electric power tool operate in a first mode for changing a direction of rotation of the motor responsive to the user's operation of a first forward/reverse switching unit; and making the electric power tool operate in a second mode for changing the direction of rotation of the motor responsive to the user's operation of a second forward/reverse switching unit.

The present disclosure achieves the advantage of providing a handier electric power tool.

### Brief Description of Drawings

FIG. 1 illustrates an exemplary embodiment of an electric power tool according to the present disclosure;
FIG. 2 is a block diagram showing a motor drive control system for the electric power tool according to the exemplary embodiment of the present disclosure;
FIG. 3 illustrates a display unit and a mode select switch for the electric power tool according to the exemplary embodiment of the present disclosure;
FIG. 4 is a flowchart showing how the electric power tool according to the exemplary embodiment operates in a first mode;
FIG. 5 is a flowchart showing how the electric power tool according to the exemplary embodiment operates in a second mode; and
FIG. 6 is a flowchart showing how the electric power tool according to the exemplary embodiment operates in a third mode.

### Description of Embodiments

An embodiment of an electric power tool 1 will be described. Note that the embodiment to be described below is only an exemplary one of various embodiments of the present disclosure and should not be construed as limiting. Rather, the exemplary embodiment may be readily modified in various manners depending on a design choice or any other factor without departing from the scope of the present invention as defined by the claims.

### (Embodiment)

### (1) Configuration for electric power tool

An electric power tool 1 according to an exemplary embodiment is a handheld electric power tool. The electric power tool 1 includes: a motor 10; a driving unit 20 to be driven by the motor 10; a trigger switch 30 to be operated by a user; a first forward/reverse switching unit 40; a second forward/reverse switching unit 50; and a control unit 60. That is to say, the motor 10, the driving unit 20, the trigger switch 30, the first forward/reverse switching unit 40, the second forward/reverse switching unit 50, and the control unit 60 are constituent elements of the electric power tool 1. The electric power tool 1 further includes a housing 100.

The housing 100 is a protective casing for the electric power tool 1 and includes a body 101, a grip 102, and a base 103. The body 101 is formed in the shape of a cylinder extending in a forward/backward direction. The grip 102 is formed in the shape of a cylinder extending in an upward/downward direction. The grip 102 is extended from a lower part of a peripheral surface of the body 101 to protrude in an upward/downward direction. The base 103 is formed in the shape of a box with a bottom opening. The base 103 is provided at the lower end of the grip 102. Inside the body 101, arranged are the motor 10 and driving unit 20, which are powered by battery cells in a battery pack 104.

As used herein, the "forward/backward direction" defined for the electric power tool 1 refers to the direction in which a shaft 11 of the motor 10 extends. Also, the "upward/downward direction" refers herein to the direction perpendicular to the forward/backward direction and substantially aligned with the direction in which the grip 102 protrudes from the body 101. Furthermore, as used herein, a direction defining the width of the electric power tool 1 perpendicularly to the forward/backward direction and the upward/downward direction will be hereinafter referred to as a "rightward/leftward direction."

In the electric power tool 1 according to this embodiment, the battery pack 104 of a rechargeable type is attached to the lower surface of the base 103 so as to be readily removable from the base 103. The electric power tool 1 is powered by the battery pack 104. In this embodiment, the battery pack 104 is not a constituent element of the electric power tool 1. However, this is only an example and should not be construed as limiting. Alternatively, the electric power tool 1 may include the battery pack 104 as a constituent element. The battery pack 104 includes an assembled battery formed by connecting a plurality of secondary batteries (such as lithium-ion batteries) together in series, and a case that houses the assembled battery. The battery pack 104 includes a communications connector for transmitting battery information about the battery pack 104. Examples of the battery information include various pieces of information about the temperature, battery level, rated voltage, rated capacity, and number of times of use of the batteries.

The driving unit 20 drives a tip tool in rotation by using the rotation of the motor 10. That is to say, the driving unit 20 has a mechanism for transmitting the rotational driving force of the motor 10 to an output shaft 21. In the electric power tool 1 according to this embodiment, the driving unit 20 may include a reducer mechanism, a clutch mechanism, or an impact mechanism, for example. The driving unit 20 is coupled to the shaft 11 of the motor 10. In addition, the driving unit 20 is also coupled to the output shaft 21. The output shaft 21 is coupled to a chuck 22, which is exposed at the front end of the body 101. The tip tool is mounted removably to the chuck 22. That is to say, the electric power tool 1 according to this embodiment includes the chuck 22 for holding the tip tool thereon. Examples of tip tools that may be mounted to the chuck 22 include driver bits, taps, and drill bits. As the shaft 11 of the motor 10 rotates, the driving unit 20 is driven, which in turn causes the output shaft 21 to rotate. Then, as the output shaft 21 rotates, the chuck 22 also turns, which causes the tip tool mounted to the chuck 22 to rotate as well.

The trigger switch 30 is provided for an upper front part of the grip 102. The trigger switch 30 accepts a manual operation of partially depressing the trigger switch 30 into the grip 102. The trigger switch 30 may be configured as a mechanical switch, for example. The trigger switch 30 opens and closes in response to the manual operation.

The first forward/reverse switching unit 40 includes a slide switch 41, which may be operated by the user to change the direction of rotation of the motor 10 from a forward direction to a reverse direction, and vice versa. That is to say, the user may change the direction of rotation of the motor 10 by operating the slide switch 41. The slide switch 41 is provided for a lower portion of the body 101 and located behind the trigger switch 30. The slide switch 41 is a movable switch, which is slidable in the rightward/leftward direction. Specifically, when the electric power tool 1 is viewed from the front, the slide switch 41 slides from a position where the slide switch 41 protrudes from one of the right and left side surfaces of the housing 100 to a position where the slide switch 41 protrudes from the other of the right and left side surfaces.

The electric power tool 1 according to this embodiment has a first mode in which the user is allowed to change the direction of rotation of the motor 10 by operating the first forward/reverse switching unit 40. That is to say, in the first mode, the direction of rotation of the motor 10 changes responsive to the user's operation of the slide switch 41. In that case, while the slide switch 41 protrudes from one of the right and left side surfaces of the housing 100, the motor 10 rotates in the forward direction. When the slide switch 41 is turned to protrude from the other of the right and left side surfaces, the motor 10 reverses its direction of rotation. This allows the user to sense, either with the eye or by touch, from which side surface the slide switch 41 now protrudes. The slide switch 41 may be operated by the user with the other free hand of his or hers, which is not used to hold the electric power tool 1. That is to say, the user may operate the slide switch 41 with the other free one of his or her hands that is not used to hold the grip 102.

The second forward/reverse switching unit 50 is provided separately from the trigger switch 30 and the first forward/reverse switching unit 40, and includes a touch switch 51 that allows the user to change the direction of rotation of the motor 10 from the forward direction to the reverse direction, and vice versa. In other words, the user may also change the direction of rotation of the motor 10 by operating the touch switch 51 of the second forward/reverse switching unit 50 as well. That is to say, the electric power tool 1 according to this embodiment includes, as means for changing the direction of rotation of the motor 10, not only the trigger switch 30 and the first forward/reverse switching unit 40 but also the second forward/reverse switching unit 50 as well. Therefore, the electric power tool 1 according to this embodiment is provided with an increased number of means for changing the direction of rotation of the motor 10 and allows the user to change the direction of rotation of the motor 10 more easily.

In addition, the electric power tool 1 according to this embodiment further has a second mode in which the user is allowed to change the direction of rotation of the motor 10 by operating the second forward/reverse switching unit 50. That is to say, in the second mode, the direction of rotation of the motor 10 changes responsive to the user's operation of the touch switch 51. Specifically, when the user operates the touch switch 51 while the motor 10 is rotating in the forward direction, the motor 10 reverses its direction of rotation. On the other hand, when the user operates the touch switch 51 while the motor 10 is rotating in the reverse direction, the motor 10 changes its direction of rotation to the forward direction.

The second forward/reverse switching unit 50 is arranged adjacent to the trigger switch 30. That is to say, the touch switch 51 may be provided around the trigger switch 30 so as to be located over, behind, or under the trigger switch 30 and exposed on the outer surface of the housing 100. In addition, the touch switch 51 is suitably located close enough for the user's hand holding the grip 102, or at least one finger of his or hers, to operate the touch switch 51. For example, the touch switch 51 may be arranged at a position where the user is able to operate the touch switch 51 by lifting one of his or her fingers (normally, his or her index finger) being used to operate the trigger switch 30. In the electric power tool 1 according to this embodiment, the touch switch 51 is arranged right over the trigger switch 30 and on the front surface of the body 101. This allows the user to operate the touch switch 51 with the index finger of his or her hand holding the grip 102 lifted from the trigger switch 30. That is to say, the user may operate the touch switch 51 while not operating (i.e., pulling) the trigger switch 30. This allows the user to operate the touch switch 51 while the motor 10 is at a stop. In other words, the user is able to change the direction of rotation of the motor 10 by operating the second forward/reverse switching unit 50 while the motor 10 is at a stop.

The touch switch 51 is operated by being either pressed or touched. As the touch switch 51, a mechanical press button switch, a pressure sensitive (i.e., resistive) sensor that switches upon detecting pressure applied thereto, or a touchscreen sensor that switches upon detecting a variation in static capacitance may be used, for example.

The control unit 60 performs drive control on the motor 10 responsive to the user's operation of the trigger switch 30. That is to say, the control unit 60 either starts or stops the motor 10 as the trigger switch 30 opens or closes. Specifically, when the trigger switch 30 closes responsive to the user's pull of the trigger switch 30, the control unit 60 starts up the motor 10. On the other hand, when the trigger switch 30 opens in response to the user's stop of the manual operation of pulling the trigger switch 30, the control unit 60 stops the motor 10.

The control unit 60 includes a control circuit with a microcomputer (or microcontroller) 61. For example, the control unit 60 may include a drive switch made up of n-channel MOSFETs (metal-oxide semiconductor field-effect transistors). By turning the drive switch ON and OFF, the control unit 60 controls the supply of electric power to the motor 10 to start or stop the motor 10. The driving unit 20 drives the output shaft 21 with the motive power supplied from the motor 10. This allows the driving unit 20 to drive the tip tool mounted to the output shaft 21.

In the electric power tool 1 according to this embodiment, the control unit 60 may change the mode of operation of the electric power tool 1 from the first mode to the second mode, and vice versa. In addition, the control unit 60 may also change the mode of operation of the electric power tool 1 from one of the first mode, the second mode, or a third mode to another. That is to say, a switch of the mode of operation that determines how the electric power tool 1 operates is under the control of the control unit 60.

In the electric power tool 1 according to this embodiment, the mode of operation is changed from the first mode to the second mode, and vice versa, with a mode select switch 70.

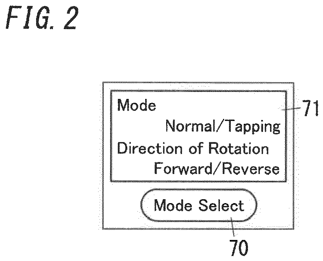

The mode select switch 70 is arranged forward of a lower part of the grip 102 so as to be exposed on the upper surface of the base 103 (see FIG. 2). In addition, a display unit 71 is provided adjacent to the mode select switch 70 and arranged forward of the lower part of the grip 102 so as to be also exposed on the upper surface of the base 103.

The mode select switch 70 is a switch for changing the mode of operation of the electric power tool 1 from a normal mode to a tapping mode, and vice versa. The mode of operation of the electric power tool 1 may be changed from the normal mode to the tapping mode, or vice versa, every time the mode select switch 70 is operated (e.g., every time the mode select switch 70 is turned ON or OFF), for example. In this case, if the mode of operation has been changed into the normal mode, a text message indicating that this is the normal mode is posted on the display unit 71. On the other hand, if the mode of operation has been changed into the tapping mode, a text message indicating that this is the tapping mode is posted on the display unit 71. The display unit 71 may be implemented as a liquid crystal display (LCD) panel, for example. The display unit 71 may indicate, for example, whether the electric power tool 1 is now operating in the normal mode or the tapping mode. The display unit 71 may also indicate the direction of rotation of the motor 10.

As used herein, the normal mode includes the first mode, and the tapping mode includes the second mode and the third mode. When the display unit 71 indicates that this is the tapping mode, the electric power tool 1 is operating in either the second mode or the third mode. In that case, the display unit 71 may indicate these two tapping modes in two different colors or in two different font sizes so as to inform the user in which of the two tapping modes (namely, the second mode or the third mode) the electric power tool 1 is now operating.

The control unit 60 includes a control circuit with a microcomputer 61. The control circuit with the microcomputer 61 is housed in the base 103.

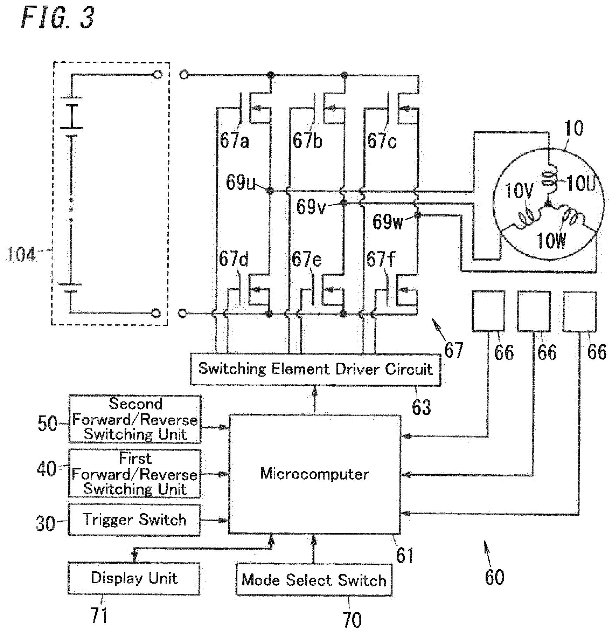

As shown in FIG. 3, the microcomputer 61 is electrically connected to the trigger switch 30, the first forward/reverse switching unit 40, the second forward/reverse switching unit 50, the display unit 71, and the mode select switch 70. In addition, the microcomputer 61 is also electrically connected to a switching element driver circuit 63 for performing drive control on a PWM inverter circuit, for example. The switching element driver circuit 63 is connected to respective switching elements 67a-67f that form a PWM inverter circuit 67 under the control of the microcomputer 61. When the switching elements 67a-67f are implemented as FETs, the switching element driver circuit 63 is connected to respective gate terminals of these switching elements 67a-67f. The respective switching elements 67a-67f of the PWM inverter circuit 67 may be six switching elements 67a-67f, which may be implemented as n-channel MOSFETs, for example.

The three arms, namely, a series circuit of the switching elements 67a and 67d, another series circuit of the switching elements 67b and 67e, and still another series circuit of the switching elements 67c and 67f, are connected together in parallel. The respective upper switching elements 67a, 67b, and 67c of these three arms are connected to a positive terminal of the battery pack 104. On the other hand, the respective lower switching elements 67d, 67e, and 67f of these three arms are connected to a negative terminal of the battery pack 104. Furthermore, nodes 69u, 69v, and 69w of connection between the upper and lower switching elements of the respective arms are respectively connected to motor coils 10u, 10v, and 10w of the motor 10.

In addition, a plurality of rotational position detection sensors 66 for detecting the rotational positions of a rotor (not shown) of the motor 10 are also connected to the microcomputer 61. In the electric power tool 1 according to this embodiment, the rotational position detection sensors 66 may be arranged at regular intervals of 120 degrees around the circumference of the motor 10. This allows the microcomputer 61 to detect the rotational position of the rotor of the motor 10 and whether or not the rotor is rotating at all.

### (2) Operation of electric power tool

Next, it will be described how the electric power tool 1 according to this embodiment may operate.

The electric power tool 1 according to this embodiment is configured to operate differently depending on whether the mode select switch 70 is ON or OFF. Specifically, when the mode select switch 70 is in OFF state, the electric power tool 1 operates in the normal mode. On the other hand, when the mode select switch 70 is in ON state, the electric power tool 1 operates in the tapping mode. Note that the normal mode corresponds to the first mode and the tapping mode corresponds to either the second mode or the third mode.

A method for controlling an electric power tool 1 according to this embodiment includes making the electric power tool 1 operate in the first mode in which the user is allowed to change the direction of rotation of the motor 10 by operating the first forward/reverse switching unit 40; and making the electric power tool 1 operate in the second mode in which the user is allowed to change the direction of rotation of the motor 10 by operating the second forward/reverse switching unit 50. A method for controlling the electric power tool 1 according to this embodiment further includes making the electric power tool 1 operate in the third mode in which the user is allowed to change the direction of rotation of the motor 10 by operating the trigger switch 30. That is to say, the electric power tool 1 according to this embodiment requires a different switch to be operated (namely, which may be the first forward/reverse switching unit 40, the second forward/reverse switching unit 50, or the trigger switch 30) from one mode to another, and changes the direction of rotation of the motor 10 responsive to the user's operation of any of these switches.

As used herein, the "tap" refers to a tool for cutting a female screw groove on the inner surface of a hole that has been cut open with a drill (a prepared hole), and "tapping" refers herein to cutting a screw hole with the tap.

### (First mode (normal mode))

In the electric power tool 1 according to this embodiment, the control unit 60 performs, in the first mode, a type of control operation of changing the direction of rotation of the motor 10 from a forward direction to a reverse direction responsive to the user's operation of the first forward/reverse switching unit 40. The control unit 60 also performs, in the first mode, another type of control operation of changing the direction of rotation of the motor 10 from the reverse direction to the forward direction responsive to the user's operation of the first forward/reverse switching unit 40. That is to say, when the electric power tool 1 is operating in the first mode, every time the first forward/reverse switching unit 40 is operated (i.e., every time the slide switch 41 is slid), the control unit 60 performs, by controlling the motor 10, either the control operation of changing the direction of rotation of the motor 10 from the forward direction to the reverse direction or the control operation of changing the direction of rotation of the motor 10 from the reverse direction to the forward direction.

The first mode is suitably adopted when the direction of rotation of the motor 10 does not need to be changed so frequently. It is not impossible to perform tapping in the first mode. However, it is not easy to perform tapping in the first mode, because the slide switch 41 needs to be slid every time the direction of rotation of the motor 10 is changed. In addition, since contacts need to be changed inside the first forward/reverse switching unit 40 when the direction of rotation is changed from the forward direction to the reverse direction, or vice versa, the contacts may be worn significantly. The normal mode is a mode suitable for cutting a prepared hole.

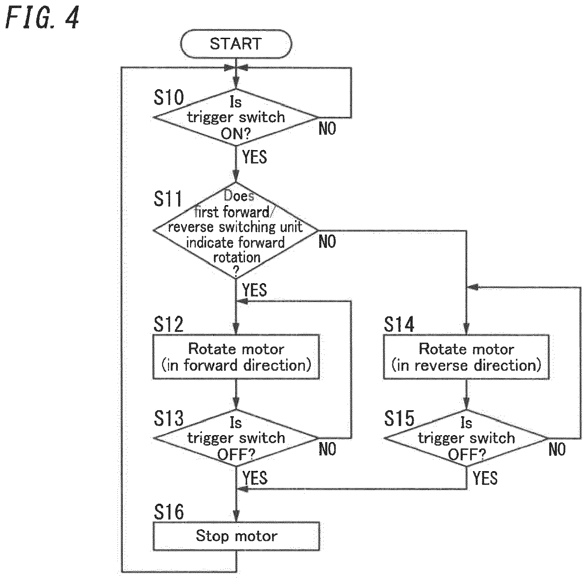

As shown in FIG. 4, the microcomputer 61 determines whether or not the trigger switch 30 is in ON state (in Step S10). When finding that the trigger switch 30 is ON (if the answer is YES in Step S10), the microcomputer 61 detects the state of the first forward/reverse switching unit 40 (in Step S11).

When finding that the first forward/reverse switching unit 40 is at a position that makes the motor 10 rotate in the forward direction (if the answer is YES in Step S11), the microcomputer 61 supplies electricity to the motor 10 to cause the motor 10 to rotate in the forward direction (in Step S12). Optionally, the microcomputer 61 may be configured to vary the number of revolutions of the motor 10 depending on how deep the trigger switch 30 is pulled, for example. In that case, the microcomputer 61 controls the inverter circuit 67 via the switching element driver circuit 63 and controls the amount of current supplied to the motor 10 such that the deeper the trigger switch 30 is pulled, the more significantly the motor 10 increases its number of revolutions.

Next, the microcomputer 61 determines whether or not the trigger switch 30 is in OFF state (in Step S13). When finding that the trigger switch 30 is ON (if the answer is NO in Step S13), the microcomputer 61 performs the previous processing step S12 all over again. That is to say, when the trigger switch 30 is ON, the microcomputer 61 keeps the motor 10 rotating in the forward direction.

On the other hand, when finding that the trigger switch 30 is OFF (if the answer is YES in Step S13), the microcomputer 61 stops supplying electricity to the motor 10 to stop the motor 10 (in Step S16).

Alternatively, when finding, in Step S11, that the first forward/reverse switching unit 40 is at a position that makes the motor 10 rotate in the reverse direction (if the answer is NO in Step S11), the microcomputer 61 supplies electricity to the motor 10 to cause the motor 10 to rotate in the reverse direction (in Step S14). Optionally, in that case, the microcomputer 61 may also be configured to vary the number of revolutions of the motor 10 depending on how deep the trigger switch 30 is pulled, for example, as described above.

Next, the microcomputer 61 determines whether or not the trigger switch 30 is in OFF state (in Step S15). When finding that the trigger switch 30 is ON (if the answer is NO in Step S15), the microcomputer 61 performs the previous processing step S14 all over again. That is to say, when the trigger switch 30 is ON, the microcomputer 61 keeps the motor 10 rotating in the reverse direction.

On the other hand, when finding that the trigger switch 30 is OFF (if the answer is YES in Step S15), the microcomputer 61 stops supplying electricity to the motor 10 to stop the motor 10 (in Step S16).

Note that when the electric power tool 1 is used in the first mode corresponding to the normal operation, the direction of rotation of the motor 10 is changed using the slide switch 41 (i.e., the first forward/reverse switching unit 40) that does not cause the rotation to be affected even when the electric power tool 1 comes into contact with something, thus ensuring a sufficient degree of reliability for machining work.

### (Second mode (tapping mode))

In the electric power tool 1 according to this embodiment, the control unit 60 performs, in the second mode, a type of control operation of changing the direction of rotation of the motor 10 from the forward direction to the reverse direction responsive to the user's operation of the second forward/reverse switching unit 50. The control unit 60 also performs, in the second mode, another type of control operation of changing the direction of rotation of the motor 10 from the reverse direction to the forward direction responsive to the user's operation of the second forward/reverse switching unit 50. That is to say, when the electric power tool 1 is operating in the second mode, every time the second forward/reverse switching unit 50 is operated (i.e., every time the touch switch 51 is pressed or touched), the control unit 60 performs, by controlling the motor 10, either the control operation of changing the direction of rotation of the motor 10 from the forward direction to the reverse direction or the control operation of changing the direction of rotation of the motor 10 from the reverse direction to the forward direction.

The second mode is suitably adopted when the direction of rotation of the motor 10 needs to be changed frequently. In the second mode, tapping may be performed by operating the trigger switch 30 and by operating the second forward/reverse switching unit 50. Therefore, tapping may be performed easily even without sliding the slide switch 41 every time the direction of rotation of the motor 10 is changed. In addition, since contacts are not changed inside the first forward/reverse switching unit 40 when the direction of rotation is changed from the forward direction to the reverse direction, or vice versa, the contacts of the first forward/reverse switching unit 40 are not worn significantly.

In the second mode, operation is performed in the same way as in the normal mode unless the second forward/reverse switching unit 50 is operated. Nevertheless, in the electric power tool 1 according to this embodiment, the maximum rotational velocity of the motor 10 in the second mode is lower than the maximum rotational velocity of the motor 10 in the first mode. That is to say, the motor 10 has its rotational velocity controlled such that its maximum rotational velocity becomes lower in the second mode than in the first mode. For example, if the rotational velocity of the motor 10 is set in the first mode at any of four different levels (namely, low, intermediate, high, and super high velocities), the rotational velocity of the motor 10 is set in the second mode at any of the three lowest ones of the four different velocities (namely, the low, intermediate, and high velocities). In addition, in the second mode, the microcomputer 61 performs control operation such that the direction of rotation of the motor 10 is not changed even when the first forward/reverse switching unit 40 is operated.

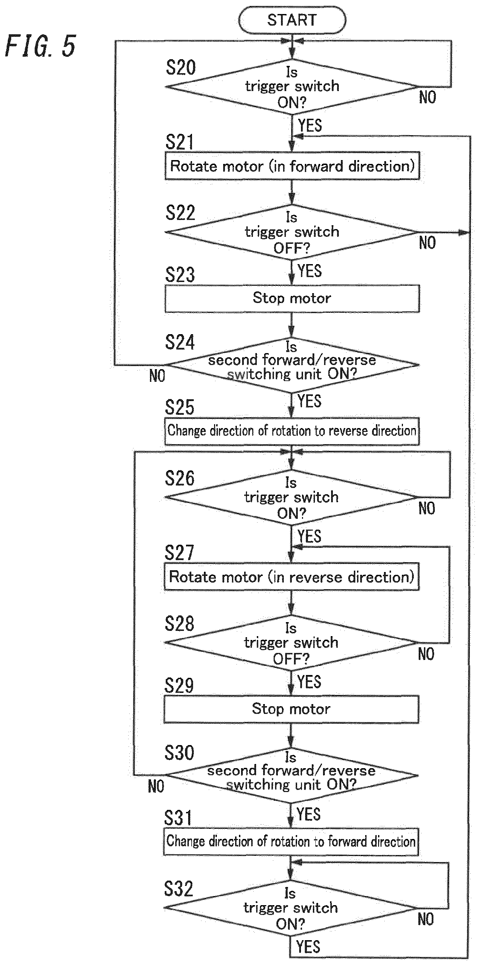

As shown in FIG. 5, the microcomputer 61 determines whether or not the trigger switch 30 is in ON state (in Step S20). When finding that the trigger switch 30 is ON (if the answer is YES in Step S20), the microcomputer 61 supplies electricity to the motor 10 to cause the motor 10 to rotate in the forward direction (in Step S21).

Next, the microcomputer 61 determines whether or not the trigger switch 30 is in OFF state (in Step S22). When finding that the trigger switch 30 is ON (if the answer is NO in Step S22), the microcomputer 61 performs the previous processing step S21 all over again. That is to say, when the trigger switch 30 is ON, the microcomputer 61 keeps the motor 10 rotating in the forward direction.

On the other hand, when finding that the trigger switch 30 is OFF (if the answer is YES in Step S22), the microcomputer 61 stops supplying electricity to the motor 10 to stop the motor 10 (in Step S23).

Next, the microcomputer 61 determines whether or not the second forward/reverse switching unit 50 is in ON state (i.e., whether the second forward/reverse switching unit 50 has been operated) (in Step S24). When finding that the second forward/reverse switching unit 50 is ON (if the answer is YES in Step S24), the microcomputer 61 changes the direction of rotation of the motor 10 to the reverse direction (in Step S25). On the other hand, when finding, in Step S24, that the second forward/reverse switching unit 50 is OFF (i.e., has not been operated) (if the answer is NO in Step S24), the microcomputer 61 performs the processing step S20 all over again. That is to say, when the trigger switch 30 is ON, the microcomputer 61 supplies electricity to the motor 10 to cause the motor 10 to rotate in the direction of rotation set in Step S21 (i.e., in the forward direction) without changing the direction of rotation of the motor 10.

Subsequently, the microcomputer 61 determines whether or not the trigger switch 30 is in ON state (in Step S26). When finding that the trigger switch 30 is ON (if the answer is YES in Step S26), the microcomputer 61 supplies electricity to the motor 10 to cause the motor 10 to rotate in the direction of rotation set in Step S25 (i.e., in the reverse direction) (in Step S27).

Next, the microcomputer 61 determines whether or not the trigger switch 30 is in OFF state (in Step S28). When finding that the trigger switch 30 is ON (if the answer is NO in Step S28), the microcomputer 61 performs the previous processing step S27 all over again. That is to say, when the trigger switch 30 is ON, the microcomputer 61 keeps the motor 10 rotating in the reverse direction.

On the other hand, when finding that the trigger switch 30 is OFF (if the answer is YES in Step S28), the microcomputer 61 stops supplying electricity to the motor 10 to stop the motor 10 (in Step S29).

Next, the microcomputer 61 determines whether or not the second forward/reverse switching unit 50 is in ON state (i.e., whether the second forward/reverse switching unit 50 has been operated) (in Step S30). When finding that the second forward/reverse switching unit 50 is ON (if the answer is YES in Step S30), the microcomputer 61 changes the direction of rotation of the motor 10 to the forward direction (in Step S31). On the other hand, when finding, in Step S30, that the second forward/reverse switching unit 50 is OFF (i.e., has not been operated) (if the answer is NO in Step S30), the microcomputer 61 performs the processing step S26 all over again. That is to say, when the trigger switch 30 is ON, the microcomputer 61 supplies electricity to the motor 10 to cause the motor 10 to rotate in the direction of rotation set in Step S25 (i.e., in the reverse direction) without changing the direction of rotation of the motor 10.

Subsequently, the microcomputer 61 determines whether or not the trigger switch 30 is in ON state (in Step S32). When finding that the trigger switch 30 is ON (if the answer is YES in Step S32), the microcomputer 61 performs the same series of processing steps S21-S32 all over again. That is to say, the microcomputer 61 supplies electricity to the motor 10 to cause the motor 10 to rotate in the direction of rotation set in Step S31 (i.e., in the forward direction). After that, the process goes back to the processing step S21 to make the microcomputer 61 perform the same series of processing steps S21-S32 all over again.

As can be seen from the foregoing description, in the second mode, the direction of rotation of the motor 10 is changed by operating the touch switch 51 (i.e., the second forward/reverse switching unit 50), not the slide switch 41 (i.e., the first forward/reverse switching unit 40) which is less easy to operate than the touch switch 51, thus facilitating the tapping operation. In addition, in the second mode, the direction of rotation of the motor 10 is not changed using the trigger switch 30, either, thus reducing the chances of the direction of rotation being changed regardless of the user's intention, every time the trigger switch 30 is turned OFF.

### (Third mode (tapping mode))

The electric power tool 1 according to this embodiment further has a third mode in which the control unit 60 performs a type of control operation of changing the direction of rotation of the motor 10 from the forward direction to the reverse direction responsive to the user's operation of the trigger switch 30, and in which the control unit 60 performs another type of control operation of changing the direction of rotation of the motor 10 from the reverse direction to the forward direction responsive to the user's operation of the trigger switch 30. That is to say, in the third mode, after the trigger switch 30 has turned from ON to OFF, the electric power tool 1 is operated, by having the motor 10 controlled by the control unit 60, such that the trigger switch 30 turns ON next time. In this case, the electric power tool 1 performs either the control operation of changing the direction of rotation of the motor 10 from the forward direction to the reverse direction or the control operation of changing the direction of rotation of the motor 10 from the reverse direction to the forward direction.

The third mode is suitably adopted when the direction of rotation of the motor 10 needs to be changed frequently. In the third mode, tapping may be performed by operating the trigger switch 30. Therefore, tapping may be performed easily even without sliding the slide switch 41 every time the direction of rotation of the motor 10 is changed. In addition, since contacts are not changed inside the first forward/reverse switching unit 40 when the direction of rotation is changed from the forward direction to the reverse direction, or vice versa, the contacts of the first forward/reverse switching unit 40 are not worn significantly.

In the electric power tool 1 according to this embodiment, the maximum rotational velocity of the motor 10 in the third mode is also lower, as in the second mode, than the maximum rotational velocity of the motor 10 in the first mode. That is to say, the motor 10 has its rotational velocity controlled such that its maximum rotational velocity becomes lower in the third mode than in the first mode. For example, if the rotational velocity of the motor 10 is set in the first mode at any of four different levels (namely, low, intermediate, high, and super high velocities), the rotational velocity of the motor 10 is set in the third mode at any of the three lowest ones of the four different velocities (namely, the low, intermediate, and high velocities). In addition, in the third mode, the microcomputer 61 performs control operation such that the direction of rotation of the motor 10 is not changed even when the first forward/reverse switching unit 40 is operated.

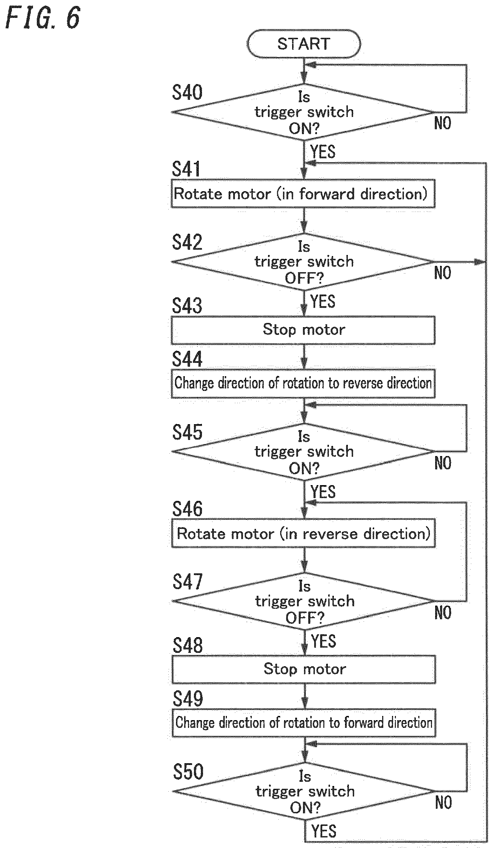

As shown in FIG. 6, the microcomputer 61 determines whether or not the trigger switch 30 is in ON state (in Step S40). When finding that the trigger switch 30 is ON (if the answer is YES in Step S40), the microcomputer 61 supplies electricity to the motor 10 to cause the motor 10 to rotate in the forward direction (in Step S41).

Next, the microcomputer 61 determines whether or not the trigger switch 30 is in OFF state (in Step S42). When finding that the trigger switch 30 is ON (if the answer is NO in Step S42), the microcomputer 61 performs the previous processing step S41 all over again. That is to say, when the trigger switch 30 is ON, the microcomputer 61 keeps the motor 10 rotating in the forward direction.

On the other hand, when finding that the trigger switch 30 is OFF (if the answer is YES in Step S42), the microcomputer 61 stops supplying electricity to the motor 10 to stop the motor 10 (in Step S43).

Next, the microcomputer 61 changes the direction of rotation of the motor 10 to the reverse direction (in Step S44).

Subsequently, the microcomputer 61 determines whether or not the trigger switch 30 is in ON state (in Step S45). When finding that the trigger switch 30 is ON (if the answer is YES in Step S45), the microcomputer 61 supplies electricity to the motor 10 to cause the motor 10 to rotate in the direction of rotation set in Step S44 (i.e., in the reverse direction) (in Step S46).

Next, the microcomputer 61 determines whether or not the trigger switch 30 is in OFF state (in Step S47). When finding that the trigger switch 30 is ON (if the answer is NO in Step S47), the microcomputer 61 performs the previous processing step S46 all over again. That is to say, when the trigger switch 30 is ON, the microcomputer 61 keeps the motor 10 rotating in the reverse direction.

On the other hand, when finding that the trigger switch 30 is OFF (if the answer is YES in Step S47), the microcomputer 61 stops supplying electricity to the motor 10 to stop the motor 10 (in Step S48).

Next, the microcomputer 61 changes the direction of rotation of the motor 10 to the forward direction (in Step S49).

Subsequently, the microcomputer 61 determines whether or not the trigger switch 30 is in ON state (in Step S50). When finding that the trigger switch 30 is ON (if the answer is YES in Step S50), the microcomputer 61 performs the same series of processing steps S41-S50 all over again. That is to say, the microcomputer 61 supplies electricity to the motor 10 to cause the motor 10 to rotate in the direction of rotation set in Step S49 (i.e., in the forward direction). After that, the process proceeds to the processing step S42 to make the microcomputer 61 perform the same series of processing steps S42-S50 all over again.

The third mode allows the direction of rotation of the motor 10 to be changed simply by operating the trigger switch 30, thus enabling the tapping work to be done sufficiently efficiently.

### (Variations)

Note that the embodiment described above is only an exemplary one of various embodiments of the present disclosure and should not be construed as limiting. Rather, the exemplary embodiment described above may be readily modified in various manners depending on a design choice or any other factor without departing from the scope of the invention as defined by the claims.

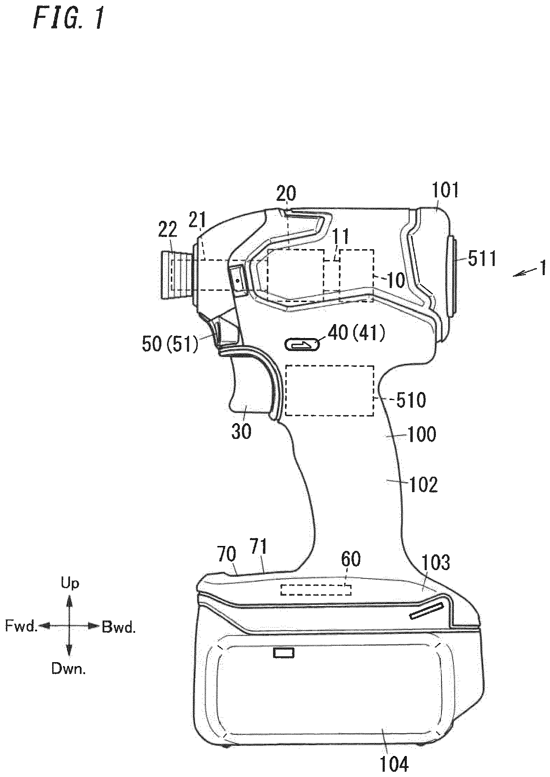

In the electric power tool 1 described above, the touch switch 51 is arranged right over the trigger switch 30 and on the front surface of the body 101. However, this is only an example and should not be construed as limiting. Rather, the touch switch 51 may be arranged at any other position as long as the user is able to operate the touch switch 51 with one of the fingers of his or her hand holding the grip 102 lifted from the grip 102 without releasing the grip 102. For example, the touch switch 51 may also be arranged in the upper part of the grip 102 so as to be located behind the trigger switch 30 and under the slide switch 41 and be exposed on the surface of the housing 100 (e.g., in the region 510 enclosed by the dashed rectangle in FIG. 1). This allows the user to operate the touch switch 51 with the thumb or index finger of his or her hand holding the grip 102. Alternatively, the touch switch 51 may also be arranged to be exposed on the rear surface of the body 101 (as indicated by the reference sign 511 in FIG. 1). This allows the user to operate the touch switch 51 with the other free hand of his or hers, instead of his or her hand holding the grip 102.

Also, in the embodiment described above, the user changes the mode of operation of the electric power tool 1 from one of the first, second, and third modes to another using the mode select switch 70. However, this is only an example and should not be construed as limiting. For example, the mode of operation may be changed from the first mode to the second mode, or vice versa, responsive to a particular type of operation performed on either the first forward/reverse switching unit 40 or the second forward/reverse switching unit 50. That is to say, the user may change the mode of operation of the electric power tool 1 from the first mode to the second mode, or vice versa, by operating the first forward/reverse switching unit 40 or the second forward/reverse switching unit 50. For example, the mode of operation of the electric power tool 1 may be changed from the first mode to the second mode, or vice versa, when the touch switch 51 of the second forward/reverse switching unit 50 is pressed and held down. Alternatively, the mode of operation of the electric power tool 1 may also be changed from the first mode to the second mode, or vice versa, according to the number of times the touch switch 51 is pressed.

Optionally, while the electric power tool 1 is operating in the third mode, the user may change the mode of operation of the electric power tool 1 from the third mode to the second mode by operating the touch switch 51. Furthermore, while the electric power tool 1 is operating in the second mode or third mode, the user may change the mode of operation of the electric power tool 1 from the second mode or the third mode to the first mode by operating the first forward/reverse switching unit 40.

In the embodiment described above, the display unit 71 presents a text message, indicating the mode of operation of the electric power tool 1 visually, to the user. However, this is only an example and should not be construed as limiting. Alternatively, the display unit 71 may also inform the user of the ongoing mode of operation with a sound such as an alarm emitted. In that case, the user may distinguish one mode of operation from another by the tone of the sound. Optionally, the difference in mode of operation or a change of the mode of operation may also be indicated by the duration of the sound emitted.

Optionally, the electric power tool 1 may be controlled by a center device communicating with the electric power tool 1 over a network. In that case, the function of the control unit 60 may be performed by the center device, and the network may be a wired network or a wireless network, whichever is appropriate.

### (Resume)

As can be seen from the foregoing description, an electric power tool (1) according to a first aspect and according to claim 1 includes: a motor (10); a driving unit (20) to be driven by the motor (10); a trigger switch (30) to be operated by a user; a first forward/reverse switching unit (40); a second forward/reverse switching unit (50); and a control unit (60). The first forward/reverse switching unit (40) includes a slide switch (41) operable by the user to change the direction of rotation of the motor (10) from a forward direction to a reverse direction, and vice versa, responsive to the user's operation of the slide switch (41). The second forward/reverse switching unit (50) is provided separately from the trigger switch (30) and the first forward/reverse switching unit (40) and includes a touch switch (51) operable by the user to change the direction of rotation of the motor (10) from the forward direction to the reverse direction, and vice versa, responsive to the user's operation of the touch switch (51). The control unit (60) performs drive control on the motor (10) responsive to the user's operation of the trigger switch (30). The electric power tool (1) has a first mode and a second mode. In the first mode, the control unit (60) performs a type of control of changing the direction of rotation of the motor (10) responsive to the user's operation of the first forward/reverse switching unit (40). In the second mode, the control unit (60) performs another type of control of changing the direction of rotation of the motor (10) responsive to the user's operation of the second forward/reverse switching unit (50).

This aspect allows the user to change the direction of rotation of the motor by operating any of an increased number of switches, including not only the trigger switch (30) and the first forward/reverse switching unit (40) but also the second forward/reverse switching unit (50) as well, thus making this electric power tool (1) handier to use.

In an electric power tool (1) according to a second aspect, which may be implemented in conjunction with the first aspect, the control unit (60) performs, while the electric power tool (1) is operating in the second mode, a type of control of changing the direction of rotation of the motor (10) from the forward direction to the reverse direction responsive to the user's operation of the second forward/reverse switching unit (50) and another type of control of changing the direction of rotation of the motor (10) from the reverse direction to the forward direction responsive to the user's operation of the second forward/reverse switching unit (50).

This aspect allows the user to change the direction of rotation of the motor by operating the second forward/reverse switching unit (50), thus making this electric power tool (1) handier to use.

In an electric power tool (1) according to a third aspect, which may be implemented in conjunction with the first or second aspect, the control unit (60) is able to change a mode of operation of the electric power tool (1) from the first mode to the second mode, and vice versa.

This aspect allows the user to change a mode of operation of the electric power tool (1) from the first mode to the second mode, and vice versa, using the control unit (60), thus making this electric power tool (1) handier to use.

An electric power tool (1) according to a fourth aspect, which may be implemented in conjunction with the third aspect, further includes a mode select switch (70). The mode of operation of the electric power tool (1) is changed from the first mode to the second mode, and vice versa, with the mode select switch (70).

This aspect allows the user to change the mode of operation of the electric power tool (1) from the first mode to the second mode, and vice versa, using the mode select switch (70), thus making this electric power tool (1) handier to use.

In an electric power tool (1) according to a fifth aspect, which may be implemented in conjunction with the third aspect, the mode of operation of the electric power tool (1) is changed from the first mode to the second mode, and vice versa, in response to a particular type of operation performed on the first forward/reverse switching unit (40) or the second forward/reverse switching unit (50).

This aspect allows the user to change the mode of operation of the electric power tool (1) from the first mode to the second mode, and vice versa, by performing a particular type of operation on the first forward/reverse switching unit (40) or the second forward/reverse switching unit (50), thus making this electric power tool (1) handier to use.

In an electric power tool (1) according to a sixth aspect, which may be implemented in conjunction with any one of the first to fifth aspects, a maximum rotational velocity of the motor (10) in the second mode is lower than a maximum rotational velocity of the motor (10) in the first mode.

This aspect allows tapping to be done in the second mode, thus reducing the chances of the tap rotating at high velocities and thereby providing a handier electric power tool.

In an electric power tool (1) according to a seventh aspect, which may be implemented in conjunction with any one of the first to sixth aspects, the electric power tool (1) further has a third mode in which the control unit (60) performs a type of control of changing the direction of rotation of the motor (10) from the forward direction to the reverse direction responsive to the user's operation of the trigger switch (30) and another type of control of changing the direction of rotation of the motor (10) from the reverse direction to the forward direction responsive to the user's operation of the trigger switch (30).

This aspect allows the user to change the direction of rotation of the motor (10) by operating the trigger switch (30), thus making this electric power tool (1) handier to use.

In an electric power tool (1) according to an eighth aspect, which may be implemented in conjunction with any one of the first to seventh aspects, the second forward/reverse switching unit (50) is arranged adjacent to the trigger switch (30).

This aspect allows the user to operate the second forward/reverse switching unit (50) by lifting his or her finger from the trigger switch (30) while operating the trigger switch (30), thus making this electric power tool (1) handier to use.

A method for controlling an electric power tool (1) according to a ninth aspect and according to claim 9 is designed to control the electric power tool (1) according to any of claims 1-8 including a motor (10) and a driving unit (20) to be driven by the motor (10). The method includes: making the electric power tool (1) operate in a first mode for changing a direction of rotation of the motor (10) responsive to the user's operation of a first forward/reverse switching unit (40); and making the electric power tool (1) operate in a second mode for changing the direction of rotation of the motor (10) responsive to the user's operation of a second forward/reverse switching unit (50).

This aspect allows the user to change the direction of rotation of the motor by operating the first forward/reverse switching unit (40) and the second forward/reverse switching unit (50), thus making this electric power tool (1) handier to use.

### Reference Signs List

- 1: Electric Power Tool
- 10: Motor
- 20: Driving Unit
- 30: Trigger Switch
- 40: First Forward/Reverse Switching Unit
- 50: Second Forward/Reverse Switching Unit
- 60: Control Unit
- 70: Mode Select Switch

## Claims

1. An electric power tool (1) comprising:
a motor (10);
a driving unit (20) configured to be driven by the motor (10);
a trigger switch (30) configured to be operated by a user;
a first forward/reverse switching unit (40) including a slide switch, the slide switch being operable by the user to change a direction of rotation of the motor (10) from a forward direction to a reverse direction, and vice versa, responsive to the user's operation of the slide switch; and
a second forward/reverse switching unit (50) provided separately from the trigger switch (30) and the first forward/reverse switching unit (40)
**characterized in that**
the second forward/reverse switching unit (50) includes
a touch switch (51), the touch switch (51) being operable by the user to change the direction of rotation of the motor (10) from the forward direction to the reverse direction, and vice versa, responsive to the user's operation of the touch switch; wherein the electric power tool (1) further comprises
a control unit (60) configured to perform drive control on the motor (10) responsive to the user's operation of the trigger switch (30), and
the electric power tool (1) has:
a first mode in which the control unit (60) performs a type of control of changing the direction of rotation of the motor (10) responsive to the user's operation of the first forward/reverse switching unit (40); and
a second mode in which the control unit (60) performs another type of control
of changing the direction of rotation of the motor (10) responsive to the user's operation of the second forward/reverse switching unit (50).

2. The electric power tool (1) of claim 1, wherein
the control unit (60) is configured to perform, while the electric power tool (1) is operating in the second mode, a type of control of changing the direction of rotation of the motor (10) from the forward direction to the reverse direction responsive to the user's operation of the second forward/reverse switching unit (50) and another type of control of changing the direction of rotation of the motor (10) from the reverse direction to the forward direction responsive to the user's operation of the second forward/reverse switching unit (50).

3. The electric power tool (1) of claim 1 or 2, wherein
the control unit (60) is able to change a mode of operation of the electric power tool (1) from the first mode to the second mode, and vice versa.

4. The electric power tool (1) of claim 3, further comprising a mode select switch (70), wherein
the mode of operation of the electric power tool (1) is changed from the first mode to the second mode, and vice versa, with the mode select switch (70).

5. The electric power tool (1) of claim 3, wherein
the mode of operation of the electric power tool (1) is changed from the first mode to the second mode, and vice versa, in response to a particular type of operation performed by the user on the first forward/reverse switching unit (40) or the second forward/reverse switching unit (50).

6. The electric power tool (1) of any one of claims 1 to 5, wherein
a maximum rotational velocity of the motor (10) in the second mode is lower than a maximum rotational velocity of the motor (10) in the first mode.

7. The electric power tool (1) of any one of claims 1 to 6, wherein
the electric power tool (1) further has a third mode in which the control unit (60) performs a type of control of changing the direction of rotation of the motor (10) from the forward direction to the reverse direction responsive to the user's operation of the trigger switch (30) and another type of control of changing the direction of rotation of the motor (10) from the reverse direction to the forward direction responsive to the user's operation of the trigger switch (30).

8. The electric power tool (1) of any one of claims 1 to 7, wherein
the second forward/reverse switching unit (50) is arranged adjacent to the trigger switch (30).

9. A method for controlling an electric power tool (1) including a motor (10) and a driving unit (20) configured to be driven by the motor (10),
**characterized in that**
the electric power tool (1) is according to any of claims 1-8 and
the method includes:
making the electric power tool (1) operate in a first mode for changing a direction of rotation of the motor (10) responsive to a user's operation of a first forward/reverse switching unit (40); and
making the electric power tool (1) operate in a second mode for changing the direction of rotation of the motor (10) responsive to the user's operation of a second forward/reverse switching unit (50).

## Patentansprüche

1. Ein elektrisch betriebenes Werkzeug bzw. Elektrowerkzeug (1), das Folgendes umfasst:
einen Motor (10);
eine Antriebseinheit (20), die dazu konfiguriert ist, vom Motor (10) angetrieben zu werden;
einen Trigger-Schalter (30), der konfiguriert ist, um von einem Benutzer betätigt zu werden;
eine erste Vorwärts/Rückwärts-Schalteinheit (40), die einen Schiebeschalter beinhaltet, wobei der Schiebeschalter dazu betreibbar ist, durch den Benutzer betätigt zu werden, um eine Drehrichtung des Motors (10) von einer Vorwärtsrichtung in eine Rückwärtsrichtung und umgekehrt zu ändern, als Reaktion auf die Betätigung des Schiebeschalters durch den Benutzer; und
eine zweite Vorwärts/Rückwärts-Schalteinheit (50), die getrennt vom Trigger-Schalter (30) und der ersten Vorwärts/Rückwärts-Schalteinheit (40) bereitgestellt wird
**dadurch gekennzeichnet, dass**
die zweite Vorwärts-/Rückwärts-Schalteinheit (50) Folgendes beinhaltet:
einen Berührungsschalter (51), wobei der Berührungsschalter (51) dazu betreibbar ist, vom Benutzer betätigt zu werden, um die Drehrichtung des Motors (10) von der Vorwärtsrichtung in die Rückwärtsrichtung und umgekehrt zu ändern, und zwar als Reaktion auf die Betätigung des Berührungsschalters durch den Benutzer;
wobei das Elektrowerkzeug (1) ferner Folgendes umfasst:
eine Steuereinheit (60), die so konfiguriert ist, dass sie als Reaktion auf die Betätigung des Trigger-Schalters (30) durch den Benutzer eine Antriebssteuerung für den Motor (10) durchführt, und
das Elektrowerkzeug (1) Folgendes aufweist:
eine erste Betriebsart, in der die Steuereinheit (60) eine Art der Steuerung der Änderung der Drehrichtung des Motors (10) als Reaktion auf die Betätigung der ersten Vorwärts/Rückwärts-Schalteinheit (40) durch den Benutzer durchführt; und
eine zweite Betriebsart, in der die Steuereinheit (60) eine andere Art der Steuerung der Änderung der Drehrichtung des Motors (10) als Reaktion auf die Betätigung der zweiten Vorwärts/Rückwärts-Schalteinheit (50) durch den Benutzer durchführt.

2. Das Elektrowerkzeug (1) nach Anspruch 1, wobei
die Steuereinheit (60) so konfiguriert ist, dass sie, während das Elektrowerkzeug (1) in der zweiten Betriebsart arbeitet, eine Art der Steuerung zum Ändern der Drehrichtung des Motors (10) von der Vorwärtsrichtung in die Rückwärtsrichtung als Reaktion auf die Betätigung der zweiten Vorwärts/Rückwärts-Schalteinheit (50) durch den Benutzer, und eine andere Art der Steuerung zum Ändern der Drehrichtung des Motors (10) von der Rückwärtsrichtung in die Vorwärtsrichtung als Reaktion auf die Betätigung der zweiten Vorwärts/Rückwärts-Schalteinheit (50) durch den Benutzer durchführt.

3. Das Elektrowerkzeug (1) nach Anspruch 1 oder 2, wobei die Steuereinheit (60) in der Lage ist, eine Betriebsart des Elektrowerkzeugs (1) von der ersten Betriebsart in die zweite Betriebsart und umgekehrt zu ändern.

4. Das Elektrowerkzeug (1) nach Anspruch 3, das ferner einen Betriebsart-Wahlschalter (70) umfasst, wobei
die Betriebsart des Elektrowerkzeugs (1) mit dem Betriebsart-Wahlschalter (70) von der ersten Betriebsart in die zweite Betriebsart und umgekehrt geändert wird.

5. Das Elektrowerkzeug (1) nach Anspruch 3, wobei
die Betriebsart des Elektrowerkzeugs (1) von der ersten Betriebsart in die zweite Betriebsart und umgekehrt geändert wird, als Reaktion auf einen bestimmten Typ der vom Benutzer an der ersten Vorwärts/Rückwärts-Schalteinheit (40) oder der zweiten Vorwärts/Rückwärts-Schalteinheit (50) durchgeführten Betätigung.

6. Das Elektrowerkzeug (1) nach irgendeinem der Ansprüche von 1 bis 5, wobei
eine maximale Drehgeschwindigkeit des Motors (10) in der zweiten Betriebsart niedriger ist als eine maximale Drehgeschwindigkeit des Motors (10) in der ersten Betriebsart.

7. Das Elektrowerkzeug (1) nach irgendeinem der Ansprüche von 1 bis 6, wobei
das Elektrowerkzeug (1) ferner eine dritte Betriebsart aufweist, in der die Steuereinheit (60) eine Art der Steuerung der Änderung der Drehrichtung des Motors (10) von der Vorwärtsrichtung in die Rückwärtsrichtung als Reaktion auf die Betätigung des Trigger-Schalters (30) durch den Benutzer, und eine andere Art der Steuerung der Änderung der Drehrichtung des Motors (10) von der Rückwärtsrichtung in die Vorwärtsrichtung als Reaktion auf die Betätigung des Trigger-Schalters (30) durch den Benutzer durchführt.

8. Das Elektrowerkzeug (1) nach irgendeinem der Ansprüche von 1 bis 7, wobei
die zweite Vorwärts/Rückwärts-Schalteinheit (50) neben dem Trigger-Schalter (30) angeordnet ist.

9. Ein Verfahren zur Steuerung eines elektrisch betriebenen Werkzeugs bzw. Elektrowerkzeugs (1), das Folgendes beinhaltet: einen Motor (10) und eine Antriebseinheit (20), die dazu konfiguriert ist, vom Motor (10) angetrieben zu werden,
**dadurch gekennzeichnet, dass**
das Elektrowerkzeug (1) irgendeinem der Ansprüche von 1 bis 8 entspricht und
das Verfahren Folgendes beinhaltet:
Betreiben des Elektrowerkzeugs (1) in einer ersten Betriebsart zum Ändern einer Drehrichtung des Motors (10) als Reaktion auf die Betätigung einer ersten Vorwärts/Rückwärts-Schalteinheit (40) durch einen Benutzer; und
Betreiben des Elektrowerkzeugs (1) in einer zweiten Betriebsart zum Ändern der Drehrichtung des Motors (10) als Reaktion auf die Betätigung einer zweiten Vorwärts/Rückwärts-Schalteinheit (50) durch den Benutzer.

## Revendications

1. Un outil électrique (1) comprenant :
un moteur (10) ;
une unité d'entraînement (20) configurée pour être entraînée par le moteur (10) ;
un commutateur de déclenchement ou encore commutateur à gâchette (*trigger switch*) (30) configuré pour être actionné par un utilisateur ;
une première unité de commutation avant/arrière (40) incluant un commutateur à glissière, le commutateur à glissière pouvant être actionné par l'utilisateur pour changer un sens de rotation du moteur (10) d'un sens avant à un sens arrière, et vice versa, en réponse à l'actionnement du commutateur à glissière par l'utilisateur ; et
une deuxième unité de commutation avant/arrière (50) fournie séparément du commutateur à gâchette (30) et de la première unité de commutation avant/arrière (40)
**caractérisé en ce que**
la deuxième unité de commutation avant/arrière (50) inclut
un commutateur à effleurement (51), le commutateur à effleurement (51) pouvant être actionné par l'utilisateur pour changer le sens de rotation du moteur (10) de la direction avant à la direction arrière, et vice versa, en réponse à l'actionnement du commutateur à effleurement par l'utilisateur ;
sachant que l'outil électrique à moteur (1) comprend en outre :
une unité de commande (60) configurée pour effectuer une commande d'entraînement sur le moteur (10) en réponse à l'actionnement par l'utilisateur du commutateur à gâchette (30), et que
l'outil électrique (1) présente :
un premier mode dans lequel l'unité de commande (60) effectue un type de commande de changement du sens de rotation du moteur (10) en réponse à l'actionnement par l'utilisateur de la première unité de commutation avant/arrière (40) ; et
un deuxième mode dans lequel le dispositif de commande (60) effectue un autre type de commande de changement du sens de rotation du moteur (10) en réponse à l'actionnement par l'utilisateur de la deuxième unité de commutation avant/arrière (50).

2. L'outil électrique (1) d'après la revendication 1, sachant que
le dispositif de commande (60) est configuré pour effectuer, alors que l'outil électrique (1) fonctionne dans le deuxième mode, un type de commande de changement de sens de rotation du moteur (10) de la direction avant à la direction arrière en réponse à l'actionnement par l'utilisateur de la deuxième unité de commutation avant/arrière (50), et un autre type de commande de changement de sens de rotation du moteur (10) de la direction arrière à la direction avant en réponse à l'actionnement par l'utilisateur de la deuxième unité de commutation avant/arrière (50).

3. L'outil électrique à moteur (1) d'après la revendication 1 ou 2, sachant que
l'unité de commande (60) est en mesure de changer un mode de fonctionnement de l'outil électrique (1) du premier mode au deuxième mode, et vice versa.

4. L'outil électrique (1) d'après la revendication 3, comprenant en outre un commutateur de sélection de mode (70), sachant que
le mode de fonctionnement de l'outil électrique (1) est changé du premier mode au deuxième mode, et vice versa, avec le commutateur de sélection de mode (70).

5. L'outil électrique (1) d'après la revendication 3, sachant que
le mode de fonctionnement de l'outil électrique (1) est changé du premier mode au deuxième mode, et vice versa, en réponse à un type particulier d'opération effectuée par l'utilisateur sur la première unité de commutation avant/arrière (40) ou la deuxième unité de commutation avant/arrière (50).

6. L'outil électrique (1) d'après l'une quelconque des revendications de 1 à 5, sachant que
une vitesse de rotation maximale du moteur (10) dans le deuxième mode est inférieure à une vitesse de rotation maximale du moteur (10) dans le premier mode.

7. L'outil électrique (1) d'après l'une quelconque des revendications de 1 à 6, sachant que
l'outil électrique (1) présente en outre un troisième mode dans lequel l'unité de commande (60) effectue un type de commande de changement de sens de rotation du moteur (10) de la direction avant à la direction arrière en réponse à l'actionnement par l'utilisateur du commutateur à gâchette (30), et un autre type de commande de changement de sens de rotation du moteur (10) de la direction arrière à la direction avant en réponse à l'actionnement par l'utilisateur du commutateur à gâchette (30).

8. L'outil électrique (1) d'après l'une quelconque des revendications de 1 à 7, sachant que
la deuxième unité de commutation avant/arrière (50) est disposée de manière adjacente au commutateur à gâchette (30).

9. Un procédé pour commander un outil électrique (1) incluant un moteur (10) et une unité d'entraînement (20) configurée pour être entraînée par le moteur (10),
**caractérisé en ce que**
l'outil électrique (1) est conforme à l'une quelconque des revendications de 1 à 8 et que
le procédé inclut le fait de :
faire fonctionner l'outil électrique (1) dans un premier mode pour changer un sens de rotation du moteur (10) en réponse à l'actionnement par un utilisateur d'une première unité de commutation avant/arrière (40) ; et de
faire fonctionner l'outil électrique (1) dans un deuxième mode pour changer le sens de rotation du moteur (10) en réponse à l'actionnement par l'utilisateur d'une deuxième unité de commutation avant/arrière (50).
